(19) Europäisches Patentamt
European Patent Office
Office européen des brevets

(11) **EP 2 549 416 A1**

(12) **EUROPEAN PATENT APPLICATION**

(43) Date of publication:
**23.01.2013 Bulletin 2013/04**

(51) Int Cl.:
***G06Q 10/06*** *(2012.01)*

(21) Application number: **12177375.8**

(22) Date of filing: **20.07.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.10.2011 AU 2011235925
22.07.2011 AU 2011902929**

(71) Applicant: **Strictly Service Pty Ltd
Mackay, QLD 4740 (AU)**

(72) Inventor: **Cooke Darren
Mackay, Queensland QLD 4740 (AU)**

(74) Representative: **Blaseby, Matthew Peter et al
EIP
Fairfax House
15 Fulwood Place
London WC1V 6HU (GB)**

(54) **An online service method**

(57) The present invention relates to an online service method. The online service method is performed on an online service system including at least one server. The method includes the steps of receiving, with the online service system, bids from service providers in relation to a service to be performed for a customer, receiving, with the online service system, acceptance of one of the bids by the customer and notifying, with the online service system, a parts supplier of one or more parts required for the service to be performed.

**FIG 1**

**EP 2 549 416 A1**

**Description**

**TECHNICAL FIELD**

The present invention relates to an online service method. The present invention has particular, although not exclusive application to the servicing of automobiles.

**BACKGROUND**

The reference to any prior art in this specification is not, and should not be taken as an acknowledgement or any form of suggestion that the prior art forms part of the common general knowledge.

Automobiles are traditionally serviced at service centers such as mechanics garages, tire centers, muffler repairers, suspension repairers, etc. In practice, many automobile owners simply do not have the time or energy to identify and obtain quotes from a number of repairers before selecting a desired service provider to service their vehicle.

Owing to the vast number of service providers available, owners often loose track of when and where their vehicle has been serviced, particularly for infrequently performed services. In addition, owners are invariably not satisfied with the service provided by one service provider and would not desire to use that service provider again.

Additionally, different makes and models of automobiles usually require different parts for the service to be carried out by a service provider, resulting in additional work for the service provider when sourcing parts from a parts supplier and factoring these costs into a quotation.

US 2005/0027580 and US 2008/0040129 disclose systems which attempt to address the foregoing industry problems, but do not go far enough.

It is an object of the present invention to alleviate automobile owners of the burden of identifying repairers and obtaining quotes from those repairers and reduce the amount of work required in sourcing parts by service providers.

**SUMMARY OF THE INVENTION**

According to one aspect of the present invention, there is provided an online service method performed on an online service system including at least one server, the method including the steps of:

receiving, with the online service system, bids from service providers in relation to a service to be performed for a customer;
receiving, with the online service system, acceptance of one of the bids by the customer; and
notifying, with the online service system, a parts supplier of one or more parts required for the service to be performed.

The step of receiving bids may involve receiving bids for the service from bid schedules associated with the service providers. Bids may include a range. For example, a bid may be an indicative range such as $250-$350.

The method may further include the step of registering the service to be performed. The step of registering may involve filtering out unsuitable service providers to perform the service from potential service providers.

The method may further include the step of determining a geographic location relating to the customer. The method may further include the step of determining which service providers are located proximal to the determined geographic location.

The method may further include the step of displaying service providers located proximal to the customer and bids from each proximal service provider in connection with the service.

The method may further include the step of receiving a selection of a service provider along with a date for the service to be performed. The method may further include the step of displaying available service times for the selected service provider and date. The method may further include the step of receiving the selection of an available service time. The method may further include the step of booking the selected service time in a calendar, subsequent to receipt of a payment.

The method may further include the step of receiving a payment from the customer which amounts to receiving acceptance of one of the bids by the customer.

The method may further include the step of notifying the service provider associated with the accepted bid that the bid was successful.

The method may further include the step of ordering the parts from the parts supplier.

The method may further include the step of receiving confirmation that the one or more parts required for the service have been ordered. Responsive to receiving the confirmation that the parts have been ordered, the method may further include the step of authorising electronic payment of the parts supplier.

The method may further include the step of receiving confirmation of completion of the service. Responsive to receiving the confirmation, the method may further include the step of authorizing electronic payment of the service provider.

The method may further include the step of receiving customer feedback on the service provided by the service provider.

The service providers may include individuals or groups of individuals.

The method may further include the step of registering an individual to perform the service with the service provider. The step of registering may involve selecting the service provider from a number of service providers. The step of registering may involve generating a bid schedule including the accepted bid. The method may further include the step of creating a service availability calendar.

The method may further include the step of providing authorization to perform the service to the service provider associated with the accepted bid.

Preferably, the accepted bid need not be the lowest bid. Elaborating further, the customer need not accept the lowest bid if they have reservations about the service provider associated with that lowest bid.

Prior to the step of receiving bids, the method may further include the step of determining the service to be performed by performing a diagnostic assessment. The method may further include the step of recording details of the determined service. The service may relate to a vehicle and the step of recording details may include electronically capturing the details (e.g. vehicle identification number or number plate) and an image of the vehicle.

The method may further include the step of processing a payment for the diagnostic assessment from the customer. The method may further include the step of enabling access of the customer to a service history. Advantageously, the service history is a consolidated record of service providers and services provided in the past which enables the customer to keep track of servicing.

The method may further include the step of registering one or more of the service providers. The registered service providers bidding in accordance with the method avoid the need for the customer to identify and obtain quotes from a number of service providers. The registration of the service providers may necessitate a payment from the service providers.

The method may further involve the step of notifying the service providers of the service to elicit bids. The service providers may be notified based upon their geographic location.

The method may further involve the step of automatically providing a bid. The step of automatically providing a bid may involve the service providers setting an hourly rate. The step of automatically providing a bid may involve determining the duration that the service to be performed should take. The step of automatically providing a bid may involve determining the parts required for the service to be performed. The step of automatically providing a bid may involve determining the cost of parts required (if any) for the service to be performed.

Between the steps of receiving bids and receiving acceptance of one of the bids, the method may further include the step of enabling the customer to view all of the bids.

The step of providing authorisation may involve sending an e-mail to the service provider associated with the accepted bid, the e-mail including details of the service and the customer. The method may further include the step of notifying the service providers other than the service provider associated with the accepted bid that their bids were not successful.

The method may further include the step of sending a service provider reference number to the customer.

The method may further include the step of entering a record of the service into a service history.

The method may further include the step of keeping a calendar including available service slots for each service provider. The method may further include the step of enabling online booking of an available slot.

According to another aspect of the present invention, there is provided an online service system, including at least one computational device, configured to:

   receive bids from service providers in relation to a service to be performed for a customer; and
   receive acceptance of one of the bids by the customer.

**BRIEF DESCRIPTION OF THE DRAWINGS**

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:

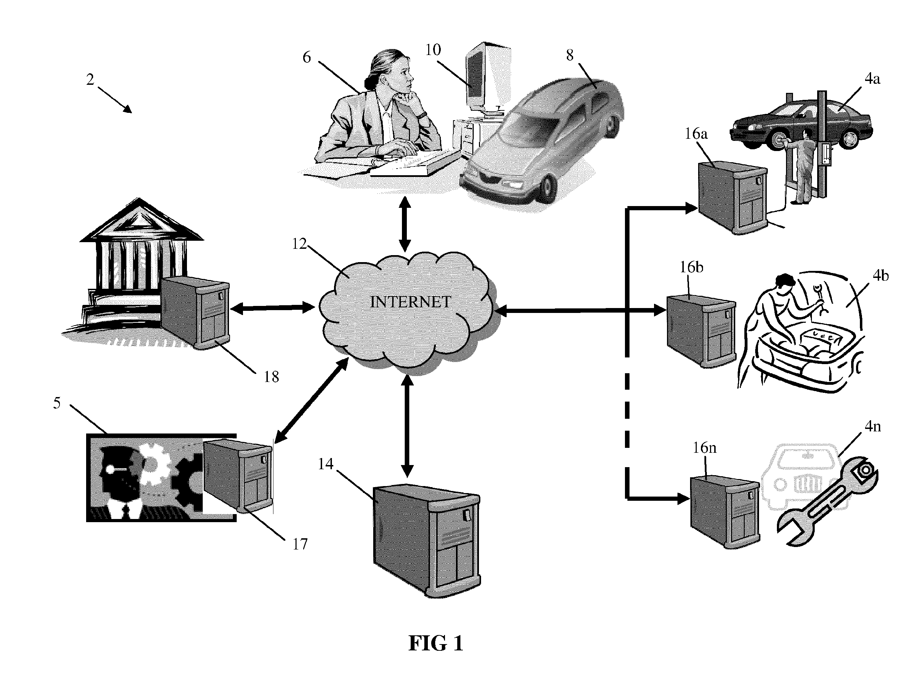

   Figure 1 is a schematic diagram of a online service system in accordance with an embodiment of the present invention;

   Figure 2 is a flowchart of an online service method in accordance with an embodiment of the present invention, the method performed using the system of Figure 1;

Figure 3 is a flowchart of another online service method in accordance with an embodiment of the present invention, the method performed using the system of Figure 1; and

Figure 4 is a schematic diagram showing the formation of an accepted bid from a bid schedule; and

Figure 5 is a message flow diagram showing messages between the system entities when determining geographic locations (upper portion of diagram) and ordering parts (lower part of diagram).

## DETAILED DESCRIPTION OF PREFERRED EMBODIMENTS

According to an embodiment of the present invention, there is provided an online service system 2 which enables automobile service providers 4 to place bids in relation to a service (e.g. repair) to be performed for a customer 6. The customer 6 owns an automobile 8 and, in using the system 2, advantageously need not identify and obtain quotes from a number of service providers 4. In addition, the customer 6 need not accept the lowest bid if they have reservations about the service provider 4 associated with that lowest bid. Advantageously, the system 2 stores a service history associated with the customer 6 and which assists the customer 6 in keeping track of servicing.

The system 2 includes a customer's computer 10 connected via the Internet 12 to a system administrator server 14. The system 2 further includes multiple service provider servers 16 (or computers) associated with respective service providers 4 and a bank server 18, all connected via the Internet 6 to the system administrator web server 14. The bank server 18 has full credit card gateway integration to receive credit card payments from the customer 6.

The system 2 further includes a parts supplier 5. The system 2 further includes a parts supplier server 17 (or computer) associated with the parts supplier and connected via the Internet 12 to the system administrator web server 14.

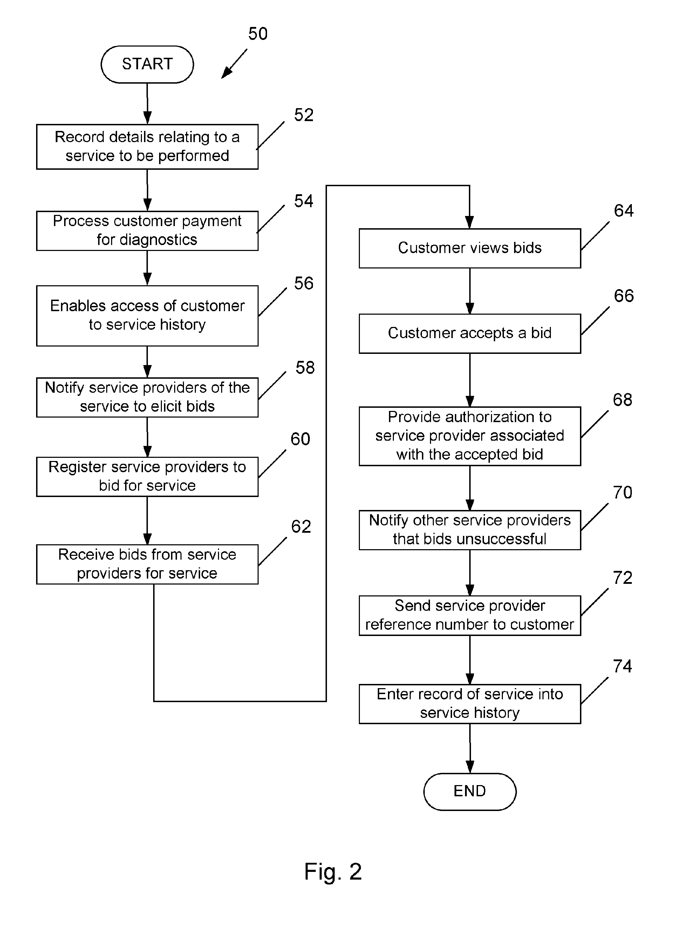

An online service method 50 performed using the system 2 is now described in detail below with reference to Figure 2.

Initially, the automobile owner 6 parks their automobile 8 in an administrator assessment bay located proximal the administration server 14. A diagnostic assessment of the automobile 8 is performed in the assessment bay to determine the service (e.g. engine repair) to be performed.

At step 52, the administrator server 14 records details relating to the determined service to be performed to the automobile 8. The recorded details include electronically captured automobile details such as a vehicle identification number (VIN) and number plate, and an image of the vehicle. The customer contact details and the determined service to be performed are also recorded.

At step 54, the administrator server 14 electronically processes a nominal payment for the diagnostic assessment of the vehicle from the customer 6 (e.g. $50). In this manner, a credit card payment is deposited for the assessment using the bank server 18.

At step 56, the administrator server 14 enables access of the paying customer 6 to a service history of the vehicle 8 by issuing the customer 6 with an access code. Advantageously, the service history is a consolidated record of service providers and services provided in the past which enables the customer 6 to keep track of servicing of the vehicle 8. The customer 6 can access the service history displayed on an administrator website using their computer 10.

At step 58, the administrator server 14 electronically notifies the service providers 4 of the required service (e.g. engine repair) to elicit bids by sending respective e-mails to the service provider servers 16. The service providers 4 may be notified based upon their geographic location using post codes.

At step 60, the administrator server 14 registers one or more of the service providers 4 to bid for the service. Each service provider registration necessitates an electronic payment from the service provider made using service provider server 16.

At step 62, the administrator server 14 receives bids from service providers 4 via servers 16 in relation to the service to be performed for the customer 6. The registered service providers 4 can later alter their bids for the service for no additional cost and are able to view the bids of other service providers 4. The registered service providers 4 bidding for the same service avoids the need for the customer 6 to identify and obtain quotes from a number of service providers 4.

At step 64, the administrator server 14 enables the customer 6 to view all of the bids with their computer 10 once they login to the administrator website with the access code issued at step 56. The administrator server 14 communicates with service provider servers 16 and keeps a calendar including available service slots for each service provider 4. In one embodiment, the customer 6 can use computer 10 to view a calendar of available service slots for each service provider 4 to assist them in making a decision as to which bid to accept.

At step 66, the administrator server 14 receives acceptance of one of the bids by the customer 6 using customer computer 10. The accepted bid need not be the lowest bid and the customer 6 need not accept the lowest bid if they have reservations about the quality of the service provider 4 associated with that lowest bid or if the available service slot times to not suit the customer 6.

At step 68, the administrator server 14 provides authorization to perform the service to the service provider 4 associated with the accepted bid. This authorization involves sending an e-mail to the service provider 4 associated with the accepted bid. The e-mail includes details of the service and the customer 6 as recorded at step 52.

At step 70, the administrator server 14 sends e-mail notifications to the service providers 4, other than the service provider 4 associated with the accepted bid, that their bids were not successful.

At step 72, the administrator server 14 e-mails a service provider reference number associated with the successful service provider 4 to the customer 6 via customer computer 10. The customer 6 can then liaise with the service provider 4 directly (offline or online) and use the reference number to arrange for the service to be performed for the cost of the accepted bid. In one embodiment, the customer 6 can use computer 10 to make a service booking in an available slot of the calendar stored on the administrator server 14. In turn, the administrator server 14 books an associated available service slot using the reference number in a calendar stored on the service provider server 16.

At step 74, the administrator server 14 enters a record of the service into the service history once confirmation of the service is received from the successful service provider 4 via service provider server 16. The customer 6 can later view the service history by logging into the administrator website with their computer 10 using the issued access code.

In accordance with the foregoing service method 50, an administrator associated with the administrator server 14 and assessment bay does not actually perform the service which is instead performed by the successful service provider 4.

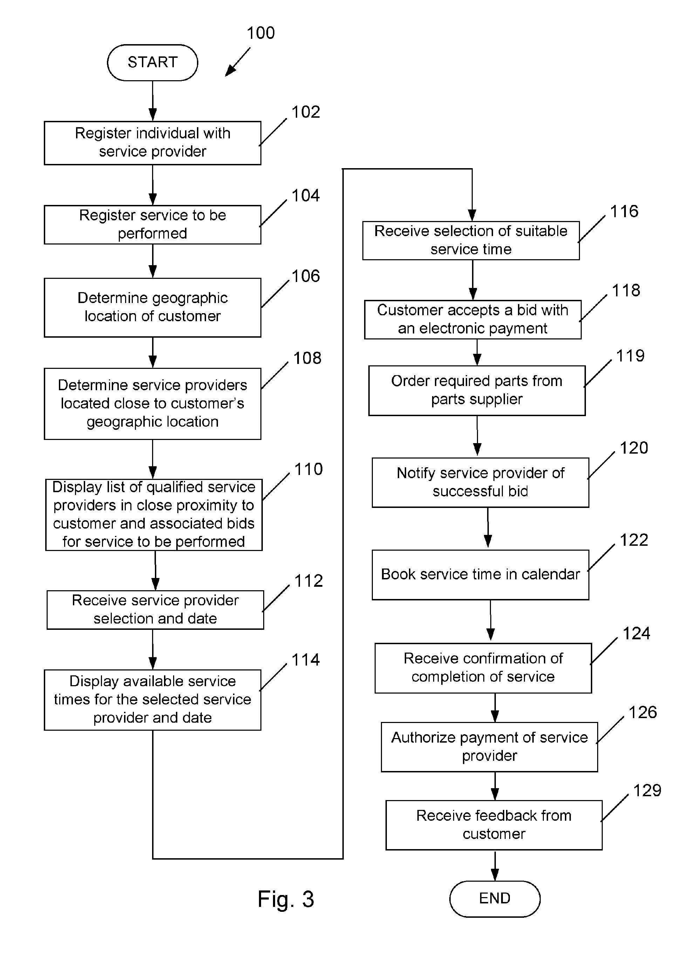

Another online service method 100 performed using the system 2 is now described in detail below with reference to Figure 3.

At step 102, the administration server 14 registers an individual freelance mechanic with a service provider 4 (e.g. garage) and creates an associated mechanic account.

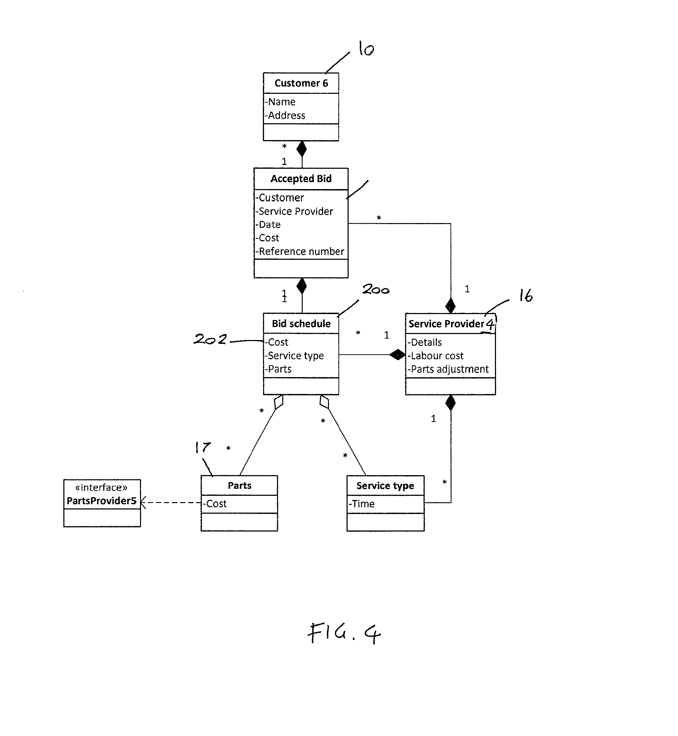

Elaborating further, the freelance mechanic uses their computer to launch the administrator website and select a suitable service provider 4 from a list of service providers for which they wish to perform work. During the registration process, the administration server 14 forms a bid schedule for the mechanic for a range of services offered (e.g. engine tune, oil change, etc). As shown in Figure 4, a series of bid schedules (or templates) 200 are established by the site administration server 14 for different service providers 4. Each bid schedule 200 includes:

    a. Car makes and models,
    b. Service types (e.g. 2 year service, oil change) for each car make and model
    c. Parts required for each service type
    d. The service duration (in hours) for each service type.

The administration server 14 populates each bid schedule 200 with a calculated bid 202 (e.g. offered price or price range) for each service as detailed below.

The parts supplier server 17 periodically calculates and inserts prices in the bid schedules 200 for each combination of car make and parts, at least daily. Similarly, the service provider servers 16 input into the bid schedules 200 additional data including labour cost and the mark-up factor (i.e. the adjustment) for parts.

The administration server 14 calculates the bid from the bid schedules as

$$\text{Bid} = (\text{duration (hours)} \times \text{labour}) + (\text{parts cost} \times \text{adjustment})$$

The service provider server 16 has the opportunity to override this bid calculation with a different endorsed amount, which is ultimately stored as the actual bid in the schedule and may be accepted by the customer 6. Advantageously, the bids are automatically updated and accurate.

During registration of the service provider, the administration server 14 also creates a calendar indicating the availability of the mechanic and in which a service booking will be registered.

At step 104, the administration server 14 registers a service to be performed to the customer's vehicle 8.

Elaborating further, the customer 6 uses their computer 10 to launch the administrator website and enter details about the service in a two step process. Firstly, the customer 6 enters details of the vehicle 8 including the make and model (e.g. Holden Commodore 1996), and the administration server 14 filters out those service providers who do not service those types of vehicles. Secondly, the customer 6 enters details relating to the type of service (e.g. muffler replacement), and the administration server 14 filters out those remaining service providers who do not provide the type of service to form a subset of qualified service providers 4.

At step 106, the administration server 14 determines the geographic location of the customer 6 (e.g. based upon the IP address of the customer's computer 10 or a location input by the customer 6 via computer 10).

At step 108, the administration server 14 determines which of the qualified service providers 4 determined at step 104 are located in close proximity to the determined geographic location of the customer 6.

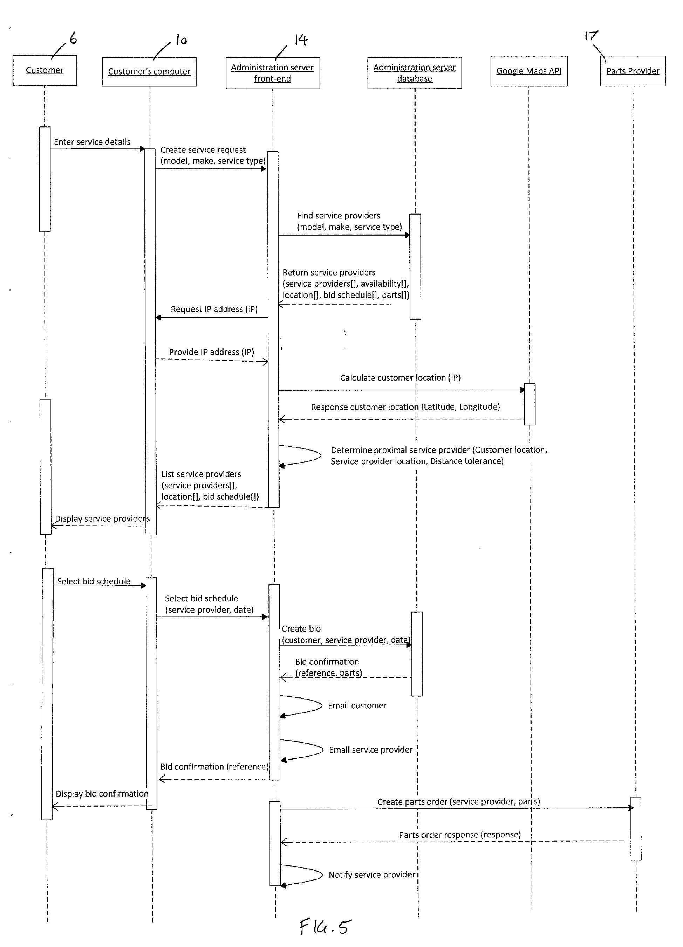

Firstly, the administration server 14 determines the service provider 4 location. The service provider 4 supplies their address during registration, including street number, name, suburb, state and postcode. These details are stored in the administration server 14 database. Using the postcode, the administration server 14 uses the Google Maps API to establish the latitude and longitude of the service provider as shown in Figure 5. This information is also stored in the administration server 14 database.

Next, the administration server 14 determines the customer 6 location. Preferably, the administration server 14 uses the IP address data provided by the customer's computer browser 10. The administration server 14 uses a third party lookup table to map the customer's computer 10 IP address to a city. This mapping is provided directly by the supplier of the customer's IP address (their Internet Service Provider). Alternatively, the customer 6 can supply their own location. For either method, the same Google Maps API is utilised to establish the latitude and longitude for the customer's 6 postcode.

Next, the administration server 14 determines the proximity distance between the service provider 4 and customer 6 locations. The administration server 14 stores a maximum proximity distance threshold of 100km from the customer location. The administration server 14 determines those service providers who are located within the proximity distance (100km) of the customer's location. The administration server 14 calculates the distance between each service provider location and the customer's location. The corresponding mathematic distance is determined using a SQL statement as follows:

$$\text{Distance} = r * \text{acos}[\sin(lat1) \times \sin(lat2) + \cos(lat1) \times \cos(lat2) \times \cos(lon2 - lon1)]$$

where
$r$ = the earth's radius (6 377.8 km)
$lat1$ = Customer's location latitude,
$lon2$ = Customer's location longitude
$lat2$ = Service provider's location latitude,
$lon2$ = Service provider's location longitude

The administration server 14 then returns only those service providers where the distance is less than or equal to the proximity distance, effectively filtering out the others.

At step 110, the administration server 14 displays a list of the qualified service providers 4 in close proximity to the customer 6 on the customer's computer 10. The administration server 14 further displays bids from each service provider in connection with the service for the customer's consideration. The bids are received from the bid schedules of the service providers 4 as discussed above in relation to step 102.

At step 112, the administration server 14 receives a selection from the customer 6 of a service provider from the list along with a date for the service to be performed.

At step 114, the administration server 14 displays on the customer's computer 10 the available times for the service for the selected service provider and date. The available times are determined using the service provider's calendar described above in relation to step 102.

At step 116, the administration server 14 receives the selection of an available service time from the customer 6.

At step 118, the administration server 14 processes customer payment of the bid in conjunction with the bank server 18. The receipt of electronic payment by the administration server 14 confirms acceptance of one of the bids by the customer using customer computer 10. The funds are typically held in escrow until the service is completed.

It will be appreciated that the accepted bid need not be the lowest bid and the customer 6 need not accept the lowest bid if they have reservations about the quality of the service provider 4 associated with that lowest bid, if the geographic location of the service provider 4 is not suitable or if the availability of the service provider is not agreeable to the customer 6.

At step 119, the administration server 14 orders any required parts from the parts supplier 5.

Elaborating further, the administration server 14 uses the details of the vehicle 8 and the details relating to the type of service to determine which parts are needed for the service (e.g. by using or accessing a service/parts database). The administration server 14 communicates with the parts supplier server 17 to order the required parts from the parts supplier 5. Typically the parts supplier 5 will confirm the ordering of any parts. Responsive to receiving the confirmation that the parts have been ordered, the administration server 14 typically authorises electronic payment of the parts supplier. Advantageously the service provider 4 does not need to spend time determining, tracking down and ordering the correct parts.

A service and parts database is refreshed on a daily basis via a secure web service with the parts supplier server 17. This enables the administration server 14 to store the most up-to-date cost of parts associated with a service type.

The administration server 14 utilises a real-time web service to place an order with the parts supplier server 17. The request includes the service provider details and a list of the parts required. The parts required are derived from the list described at step102. The parts supplier server 17 is able to confirm against the service and parts database inventory levels and respond with success or failure. The order will either succeed in full, or fail if the parts provider 5 does not have sufficient stock. The service provider 4 will be notified of the result.

At step 120, the administration server 14 sends an e-mail notification to the service provider 4 indicating that their bid for the service was successful. The e-mail notification also includes details of the customer 6 and the service. The administration server 14 sends an e-mail receipt to the customer 6.

At step 122, the administration server 14 books the service time selected at step 116 in the service provider calendar. The customer 6 can then proceed to have their vehicle 8 serviced by the successful service provider 4 at the booked time and date.

At step 124, the administration server 14 receives confirmation of completion of the service from the service provider's server 16.

At step 126, the administration server 14 authorizes electronic payment of the service provider 4. The administrator keeps a booking fee from the overall initial customer payment.

At step 129, the administration server 14 receives feedback from the customer 6 input via computer 10.

Elaborating further, once the service has been completed, the customer 6 can use their computer 10 to launch the administrator website and leave feedback on the service provided by the service provider 4 (e.g. a star rating and/or comments). The feedback left for a particular service provider 4 may be displayed by the administration server 14 to provide the customer 6 with an indication of the quality of the service provider 4.

A person skilled in the art will appreciate that many embodiments and variations can be made without departing from the ambit of the present invention.

For example, at step 60 above, the service providers 4 registered to bid for a particular service. In an alternative embodiment, the service providers 4 could instead pay a subscription to bid for any service over a period of time (e.g. 6 months).

In one embodiment, the customer 6 may use their computer 10 to access the administrator website hosted on the administrator server 18 to create a customer account to which the service history is linked.

Similarly, the service providers 4 can also use servers 16 to create a service provider accounts by which the administration server 18 can identify the service providers at step 58. In one embodiment, the service provider 4 can use their server 16 to view and print out service schedules linked to their account and stored in calendar format on the administration server 18.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims appropriately interpreted by those skilled in the art.

**Claims**

1. An online service system including:

   an administration server;
   service provider servers operable to provide bids to the administration server in relation to a service to be performed by service providers and for a customer;
   at least one customer computer operable to accept of one of the bids provided to the administration server; and
   at least one parts supplier server operable to be notified by the administration server of one or more parts required for the service to be performed by the service provider associated with the accepted bid.

2. An online service system as claimed in claim 1, wherein the bids are calculated using car part prices provided by the parts supplier server and labour costs provided separately by the service provider servers.

3. An online service system as claimed in claim 2, wherein the bids may be overridden by the service providers with a final binding bid.

4. An online service system as claimed in any one of the preceding claims, wherein the administration server automatically and periodically calculates the bids.

5. An online service system as claimed in any one of the preceding claims, wherein the administration server filters out those service providers that do not service types of products and then further filters out those remaining service providers that do not provide a type of service to form a subset of qualified service providers.

6. An online service system as claimed in any one of the preceding claims, wherein the administration server determines which service providers are located in close proximity to the geographic location of the customer.

7. An online service system as claimed in claim 6, wherein the geographic proximity determination involves determining the service provider locations and determining the customer location.

8. An online service system as claimed in claim 7, wherein either or both of the locations are determined by correlating postcodes with a corresponding latitude and longitude.

9. An online service system as claimed in claim 7, wherein either or both of the locations are determined by comparing an internet protocol (IP) address with a lookup table to determine latitude and longitude.

10. An online service system as claimed in claim 7, wherein the proximity determination involves:

     calculating the distance between each service provider and the customer using the equation:

$$\text{Distance} = r * \text{acos}[\sin(\text{lat1}) \times \sin(\text{lat2}) + \cos(\text{lat1}) \times \cos(\text{lat2}) \times \cos(\text{lon2} - \text{lon1})]$$

     where

     r = the earth's radius (6 377.8 km)
     lat1 = Customer's location latitude,
     lon2 = Customer's location longitude
     lat2 = Service provider's location latitude,
     lon2 = Service provider's location longitude

11. An online service system as claimed in claim 10, further including the step of filtering out service providers located more than a predetermined distance threshold from the customer.

12. An online service system as claimed in any one of the preceding claims, wherein the parts supplier server compares the notification with an inventory database and further sends a related supply message to the administration server.

13. An online service system as claimed in any one of the preceding claims, wherein the customer computer displays available service times for the selected service provider derived from a service provider calendar.

14. An online service system as claimed in claim 13, wherein the customer can select a service time to book the selected service time into the service provider calendar.

15. An online service method performed on an online service system including at least one server, the method including the steps of:

     receiving, with the online service system, bids from service providers in relation to a service to be performed for a customer;
     receiving, with the online service system, acceptance of one of the bids by the customer; and
     notifying, with the online service system, a parts supplier of one or more parts required for the service to be performed.

FIG 1

Fig. 2

START

Register individual with service provider — 102

Register service to be performed — 104

Determine geographic location of customer — 106

Determine service providers located close to customer's geographic location — 108

Display list of qualified service providers in close proximity to customer and associated bids for service to be performed — 110

Receive service provider selection and date — 112

Display available service times for the selected service provider and date — 114

Receive selection of suitable service time — 116

Customer accepts a bid with an electronic payment — 118

Order required parts from parts supplier — 119

Notify service provider of successful bid — 120

Book service time in calendar — 122

Receive confirmation of completion of service — 124

Authorize payment of service provider — 126

Receive feedback from customer — 129

END

100

Fig. 3

*10*

**Customer 6**

-Name
-Address

\*
1

**Accepted Bid**

-Customer
-Service Provider
-Date
-Cost
-Reference number

\*

1

1

*16*

*200*

**Bid schedule**

*202*

-Cost
-Service type
-Parts

\*

1

**Service Provider 4**

-Details
-Labour cost
-Parts adjustment

1

\*

\*

*17* \*

\*

«interface»
**PartsProvider5**

**Parts**

-Cost

**Service type**

-Time

\*

FIG. 4

Customer | Customer's computer | Administration server front-end | Administration server database | Google Maps API | Parts Provider

Enter service details

Create service request
(model, make, service type)

Find service providers
(model, make, service type)

Return service providers
(service providers[], availability[],
location[], bid schedule[], parts[])

Request IP address (IP)

Provide IP address (IP)

Calculate customer location (IP)

Response customer location (Latitude, Longitude)

Determine proximal service provider (Customer location,
Service provider location, Distance tolerance)

List service providers
(service providers[],
location[], bid schedule[])

Display service providers

Select bid schedule

Select bid schedule
(service provider, date)

Create bid
(customer, service provider, date)

Bid confirmation
(reference, parts)

Email customer

Email service provider

Bid confirmation (reference)

Display bid confirmation

Create parts order (service provider, parts)

Parts order response (response)

Notify service provider

FIG. 5

13

Europäisches
Patentamt

European
Patent Office

Office européen
des brevets

## EUROPEAN SEARCH REPORT

**Application Number**

EP 12 17 7375

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | The technical aspects of the claimed invention relate to the use of general-purpose data processing technology for processing data of an inherently non-technical nature. The information technology employed is considered to generally known. See also Official Journal 11/2007, p. 592. XP007905525 | 1-15 | INV. G06Q10/06 |
| L | * the whole document * | 1-15 | |

-----

TECHNICAL FIELDS
SEARCHED (IPC)

G06Q

The present search report has been drawn up for all claims

| Place of search | Date of completion of the search | Examiner |
|---|---|---|
| Munich | 13 November 2012 | Hopper, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 549 416 A1**

**Patent documents cited in the description**

- US 20050027580 A
- US 20080040129 A